(19) Europäisches Patentamt
European Patent Office
Office européen des brevets

(11) EP 2 840 385 A1

(12) **EUROPEAN PATENT APPLICATION**

(43) Date of publication:
25.02.2015 Bulletin 2015/09

(51) Int Cl.:
$G01N\ 25/18^{(2006.01)}$ $\qquad$ $G01N\ 25/00^{(2006.01)}$

(21) Application number: 13181508.6

(22) Date of filing: 23.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: DCG Systems, Inc.
Fremont, CA 94538 (US)

(72) Inventors:
• Schmidt, Christian
91058 Erlangen (DE)
• Meinhardt-Wildegger, Raiko
91058 Erlangen (DE)

(74) Representative: Puschmann Borchert Bardehle
Patentanwälte Partnerschaft mbB
Postfach 10 12 31
80086 München (DE)

(54) **Lock-in thermography method and system for determining material layer parameters of a sample**

(57) A method and a system for determining material parameters of a sample layer (24) by using lock-in thermography (LIT) comprise applying a test signal to a heat source to heat up the sample layer and imaging the sample layer using an infrared sensor to obtain IR images of the sample layer while the test signal is applied to the heat source; detecting a thermal response signal obtained from the imaging being in correlation to thermal heat propagation within the sample layer; determining the phase shifts of the frequency specific response signal; and using the phase shift of the frequency specific response signal to calculate material parameters of the sample layer, the material parameters being any of material density, specific heat capacity, heat conductivity and thermal diffusion length.

Fig. 2

**Description**

The invention relates to method and system for determining material parameters of samples, especially of samples in the form of a slab, sheet, and similar flat shapes.

There are numerous attempts in the art for determining material parameters, in particular thermal material parameters of sample layers. The most known technologies are so called time-domain thermoreflectance method and the laser flash analysis method.

Time-domain thermoreflectance analysis is a method by which the thermal properties of a material can be measured, most importantly thermal conductivity, see, e.g., http://en.wikipedia.org/wiki/Time-domain thermoreflectance. The idea behind this technique is that once a material is heated up, the change in the reflectance of the surface can be utilized to derive the thermal properties. The reflectivity is measured with respect to time, and the data received can be matched to a model which contains coefficients that correspond to thermal properties. The technique of this method is based on the monitoring acoustic waves that are generated with a pulsed laser. Localized heating of a material will create a localized temperature increase, which induces thermal stress. This stress builds in a localized region causes an acoustic strain pulse. At an interface, the pulse will be subjected to a transmittance/reflectance state, and the characteristics of the interface may be monitored with the reflected waves. A probe laser will detect the effects of the reflecting acoustic waves by sensing the piezo-optic effect.

There is a problem with the thermoreflectance method in that only the surface of the sample layer influences the measurement beams of the laser, which means that variations of the thermal conductivity of the sample layer across the extension of the sample layer are not detected or taken into account. Furthermore, the heat conductivity is measured only at a single spot where the reflectance of the laser beam takes place, which also restrict the useful information obtained by this method.

The laser flash analysis or laser flash method is used to measure thermal diffusivity of a multiplicity of different materials, see http://en.wikipedia.org/wiki/Laser flash analysis. An energy pulse heats one side of a plane-parallel sample. The temperature rise on the backside due to the energy input is time-dependent detected. The higher the thermal diffusivity of the sample, the faster the energy reaches the backside. A laser pulse heats the sample on the bottom side and a detector detects the temperature signal versus time on the top side of the sample. For measuring the thermal diffusivity at different temperatures, the sample is placed in a furnace at constant temperature. Conditions for satisfactory results are homogenous material, a homogenous energy input on the front side and a time-dependent short pulse.

In W.J. Parker, R.J. Jenkins, C.P. Butler, G.L. Abbott (1961). "Method of Determining Thermal Diffusivity, Specific heat capacity and Thermal Conductivity". Journal of Applied Physics 32 (9): 1679. Bibcode:1961JAP.32.1679P. doi:10.1063/1.1728417, a flash method of measuring the thermal diffusivity, heat capacity, and thermal conductivity is described. A high - intensity short - duration light pulse is absorbed in the front surface of a thermally insulated specimen a few millimeters thick coated with camphor black, and the resulting temperature history of the rear surface is measured by a thermocouple and recorded with an oscilloscope and camera. The thermal diffusivity is determined by the shape of the temperature versus time curve at the rear surface, the specific heat capacity by the maximum temperature indicated by the thermocouple, and the thermal conductivity by the product of the heat capacity, thermal diffusivity, and the density. These three thermal properties are determined for copper, silver, iron, nickel, aluminum, tin, zinc, and some alloys at 22°C and 135°C and compared with previously reported values.

US 7,038,209 relates to a device for detecting the thermal conductivity by application of optical pulse techniques, i.e. laser flash analysis. A sample preheated in a furnace is exposed to energy by means of an optical pulse. The temperature profile in the sample is recorded by means of an infrared sensor. The thermal conductivity of the sample is then be detected by mathematical derivation. To reduce the influence of the time history of the optical pulse on measurement, a measuring means is provided for determining this history. An analyzer unit then derives therefrom the corrected temperature profile.

Since, in the laser flash analysis method, the temperature of the surface of the sample layer opposite to the surface eradiated by the laser beam is measured, variations of the heat conductivity across the surface and within the bulk of the sample layer cannot be determined.

In the paper of CHRISTIAN SCHMIDT et al: "Non-destructive defect depth determination at fully packaged and stacked die devices using Lock-in Thermography", PHYSICAL AND FAILURE ANALYSIS OF INTEGRATED CIRCUITS (IPFA, 2010), proceedings 17th IEEE International Symposium on the IEEE, ... , NJ, USA, July 5, 2010 (2010-07-05), pages 1 to 5, XP 031720074, ISBN 978-1-4244-5596-6, a non-destructive approach for the 3D localization of thermally active buried defects in single chip and stacked die architectures by use of lock-in thermography (LIT) is presented. The paper also explains the method of how to process the time resolved result curves to obtain the frequency vs. phase shift curves from which the depth location of the thermally active buried defects is derived. The basic principal concerns the thermal wave propagation through different material layers and the resulting phase shift. Based on that, the LIT application for 3D defect localization is explained and both fully packaged single chip and stacked die devices are considered while comparing the theoretical and experimental data (results).

WO 2011/156527 AI refers to three dimensional hot spot localization using lock-in thermography (LIT) by detecting very small temperature variations across a sample layer by direct thermal imaging, using an IR sensitive camera combined with pixel-wise two channel lock-in correlation. The lock-in thermography of the WO 2011/156527 is focused on finding the exact location of defects in a stack of dies. In particular, the presence of defects producing hot spots in the circuitry of the device under test is an absolute requirement for carrying out the LIT-method according to such state of the art.

In view the state of the art as discussed above, there is a definite need for a method and a system for determining material parameters of a sample layer without the above mentioned restrictions also in cases where the sample layers are not optically transparent.

The following summary of the disclosure is included in order to provide a basic understanding of some aspects and features of the invention. This summary is not an extensive overview of the invention and as such it is not intended to particularly identify key or critical elements of the invention or to delineate the scope of the invention. Its sole purpose is to present some concepts of the invention in a simplified form as a prelude to the more detailed description that is presented below.

Embodiments disclosed herein enable determination of material parameters of a sample. The embodiments may be utilized to determine particular thermal parameters of the sample, to determine uniformity of the materials in the sample, to determine uniformity of thickness of the sample or layers thereof, to determine cumulative parameters of sample made out of different layers of different materials, and more.

For this purpose, according to an aspect of the invention, a method f or determining material parameters of a sample layer having a first surface and a second surface opposite to the first surface, comprises using lock-in thermography (LIT) by producing a localized hot spot by at least one heat source on the first surface of the sample layer by applying at least one test signal of at least one lock-in frequency to the heat source to activate the heat source; imaging the sample layer on the second surface using an infrared sensor to obtain IR images of the sample layer while the test signal is applied to the heat source; detecting a thermal response signal obtained from the imaging of the sample layer, the thermal response signal being in correlation to thermal heat propagation within the sample layer; determining the phase shift of the frequency specific response signal with respect to the test signal at a heat source position; and obtaining a frequency vs. phase shift measurement from the determined phase shift of the frequency specific response signal to the test signal which phase shift is related to the material parameters of the sample layer, wherein the material specific parameter is any of a material density, a material heat capacity, a material specific heat conductivity and a thermal diffusion length of the material, Using only one test signal of at least one lock-in frequency is the first and most simple embodiment to implement the method of the invention. The result of this method is to obtain one phase shift measurement at one distinctive lock-in frequency, and this information is already valuable in determining the approximate value of the material specific parameter.

According to another aspect of the invention the above method comprises applying a plurality of test signals of a plurality of lock-in frequencies to the heat source to activate the heat source; imaging the sample layer using an infrared sensor to obtain IR images of the sample layer while the test signals are applied to the heat source; detecting thermal response signals obtained from the imaging of the sample layer, the thermal response signals being in correlation to thermal heat propagation within the sample layer; determining the phase shifts of the frequency specific response signals with respect to the test signals at a heat source position; and obtaining the frequency vs. phase shift curve from the determined phase shift measurements of the frequency specific response signals to the test signals which phase shifts are related to the material parameters of the sample layer. By using multiple test signals at multiple frequencies, one can obtain a number of measurement points related to different lock-in frequencies and correspondingly different phase shifts related to the respective lock-in frequencies. The resulting frequency vs. phase shift curve can be compared to a theoretical curve, and this is an advantage in determining the accuracy of the measurement and the possible deviation of the measurement points from the true value obtained by evaluating the curve for the material specific parameters.

According to another aspect of the invention the above method comprises applying a non-harmonic test signal to the heat source to activate the heat source; subjecting the response signal to a Fourier transformation (FT) to break down the response signal Into a frequency spectrum containing at least first and second harmonics signals of a base harmonic sine or cosine signal as frequency specific response signals at multiple specific frequencies; determining the phase shifts of the frequency specific response signals at the multiple specific frequencies at a heat source position, and obtaining a frequency vs. phase shift curve from the determined phase shifts of the frequency specific response signals related to the material parameters of the sample layer. The most important advantage of this method is the fact that the phase shift measurement points of a particular frequency vs. phase shift curve can be obtained for a number of lock-in frequencies during one single measurement run using one non-harmonic test signal as an excitation energy for causing the sample layer to react in reply to the non-harmonic test signal, where the respective one single response signal is a further processed to obtain the phase shift measurement points on the frequency vs. phase shift curve.

According to aspects of the invention the above methods further comprise evaluating material specific parameter frequency vs. phase shift behavior by analytical solution of the thermal wave propagation; and correlating the evaluated material specific parameter related frequency vs. phase shift behavior to the detected phase shift to identify the material specific parameter of the sample layer, or the above methods comprise calculating the material specific parameter related frequency vs. phase shift behavior by finite element modeling of thermal wave propagation; and correlating the calculated material specific parameter related frequency vs, phase shift behavior to the detected material specific parameter phase shift to identify the material specific parameter of the sample layer. It is considered that the closer the theoretical sample specific frequency vs. phase shift curve is to the measured sample specific frequency vs. phase shift curve the better is the accuracy of the measurements. By means of this analytical solution or modeling, a theoretical phase shift varies frequency grave can be created as a basis for determining the accuracy of the measurements. Alternatively, the theoretical graves can be further modified in order to reflect the structure of the sample layer.

According to an aspect of the invention the Fourier transformation in the above method is a fast Fourier transformation (FFT) whereby the measurement process per sample is further shortened because the output of the FFT are already individual frequency specific response signals at pre-selectable frequencies.

For the above purpose, according to an aspect of the invention, a system for determining material parameters of a sample layer having a first surface and a second surface opposite to the first surface, comprises using lock-in thermography (LIT) and having at least one heat source arranged below the sample layer in heat exchanging relationship with the sample layer; means for applying at least one test signal of a lock-in frequency to the heat source to activate the heat source; an infrared sensor for imaging the sample layer to obtain IR images of the sample layer while the test signal is applied to the heat source; and a processor, configured to detect a thermal response signal obtained from the imaging of the sample layer, the thermal response signal being in correlation to thermal heat propagation within the sample layer; to determine the phase shift of the frequency specific response signal with respect to the test signal at a heat source position; and to obtain a frequency vs. phase shift measurement from the determined phase shift of the frequency specific response signal to the test signal which phase shift is related to the material parameters of the sample layer, wherein the material specific parameter is any of a material density, a material specific heat capacity, a material specific heat conductivity and a thermal diffusion length of the material.

According to another aspect of the invention the above system comprises means for applying a plurality of test signals of a plurality of lock-in frequencies to the heat source to activate the heat source; a detector for detecting thermal response signals obtained from the imaging of the sample layer, the thermal response signals being in correlation to thermal heat propagation within the sample layer; determining the phase shifts of the frequency specific response signals with respect to the test signals at a heat source position; and means for obtaining a frequency vs. phase shift curve from the determined phase shift measurements of the frequency specific response signals to the test signals which phase shifts are related to the material parameters of the sample layer.

According to another aspect of the invention, wherein the test signal is a non-harmonic test signal applied to the heat source to activate the heat source, the above system comprises the processor being further configured to subject the response signal to a Fourier transformation (FT) to break down the response signal Into a frequency spectrum containing at least first and second harmonics signals of a base harmonic sine or cosine signal as frequency specific response signals at multiple specific frequencies; to determine the phase shifts of the frequency specific response signals at the multiple specific frequencies at a heat source position, and to obtain a frequency vs. phase shift curve from the determined phase shifts of the frequency specific response signals related to the material parameters of the sample layer. This system derives the measurement points of a particular frequency vs. phase shift curve for the number of lock-in frequencies during one single measurement run using one non-harmonic test signal as excitation energy. In other words, there is only one measurement necessary for each type of the sample layer.

The above systems provide the same advantages as the corresponding methods while being simple to be constructed and robust in operation.

According to an aspect of the invention the Fourier transformation in the above system is a fast Fourier transformation (FFT) whereby the measurement process per sample is further shortened because the output of the FFT are already individual frequency specific response signals at pre-selectable frequencies.

According to an aspect of the invention the above system comprises an IR camera as the infrared sensor which camera is synchronized with the test signal from an external source. By synchronizing the IR camera with the test signal, the specifics of the camera, i.e., its frame rate can be adapted to the frame rate of the test signal. For Example, its IR camera is a two-channel camera, the frame rate of the camera should be at least four times the same frequency of the lock-in test signal.

According to an aspect of the invention the heat source is a resistor on a substrate arranged in a test device configured to receive the sample layer in a heat exchanging relationship where the first surface of the sample layer is in contact with the heat source. In this way, a localized resorts is implemented which provides a similarly localized hotspot to the sample layer.

According to an aspect of the invention the heat source is a resistance heating element arranged in a test device configured to receive the sample layer in a heat exchanging relationship where the first surface of the sample layer is in contact with the heat source. The resistance heating element may preferably have the shape of a meander on the substrate so that the surface of the resistance heating element substantially covers the adjusted surface of the sample layer.

According to an aspect of the invention the heat source is a flash light configured to output a pulsed flash beam to the first surface of the sample layer. By using a flash light, the output of the flash light can either be focused to a small area of the sample layer or can be distributed across substantially the complete surface of the sample layer as eradiated by the flash light. Therefore, this embodiment of the system is particularly suited for varying the area on which the sample layer is excited by the heat source.

According to further aspects, a computer program is provided that, when executed by a computer, causes the computer to determine material property of a sample that is being thermally excited by a test signal of lock-in frequency, by performing the steps comprising: operate an IR camera at the lock-in frequency to capture images of a first surface of the sample; obtain the images from the IR camera; detect a thermal response signal from the images; determine a phase shift of the thermal response with respect to the test signal; and use the phase shift to calculate the material property of the sample, wherein the material property is at least one of: material density, material heat capacity, material specific heat conductivity and thermal diffusion length. The computer may further receive a thickness parameter, z, of the sample and calculates the thermal diffusion length, $\mu$, by inserting the thickness and the phase shift, $\Phi$, into the equation: $\mu = \frac{z}{\Phi} * 180/\pi$. The computer program may further receive a thickness parameter, z, of the sample and calculates the thermal diffusivity, a, by inserting the thickness, z, and the phase shift, $\Phi$, into the equation:

$$a = \pi f_0 \left(\frac{z}{\Phi}\frac{180}{\pi}\right)^2.$$

The computer program may further receive a density parameter, $\rho$, and specific heat conductivity, $\lambda$, of the sample and calculates the specific heat capacity, $c_p$, by inserting the density, $\rho$, specific heat conductivity, $\lambda$, the lock-in frequency $f_0$, and the thermal diffusion length, $\mu$, into the equation:

$$c_p = \frac{\lambda}{\pi \rho f_0 \mu^2}.$$

According to further aspects, a method for determining a material uniformity of a sample having a first surface and a second surface opposite to the first surface is provided, the method comprising: producing a plurality of localized hot spots over the first surface of the sample layer by applying at least one test signal of at least one lock-in frequency to a heat source; imaging the second surface of the sample using an infrared sensor to obtain IR images of the sample while the test signal is applied to the heat source; detecting a plurality of thermal response signals, each thermal response signal corresponding to one of the localized heat spots; determining a phase shift of each of the response signal with respect to the test signal at a corresponding hot spot location; using the phase shift of each of the response signal to calculate material parameter of the sample layer at the corresponding hot spot location; and, comparing the material parameters to determine the uniformity of the sample. The material parameter may be any of: a material density, a material specific heat capacity and a material specific heat conductivity. The step of producing a plurality of localized hot spots may comprise applying a plurality of test signals of multiple lock-in frequency to the heat source. The test signal may be a non-harmonic signal and the method may further comprise applying a Fourier transformation to the thermal response signals to obtain phase shift corresponding to a plurality of lock-in frequencies. The heat source may comprise a plurality of resistors or an illumination source.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. The accompanying drawings, which are incorporated in and constitute a part of this specification, exemplify the embodiments of the present invention and, together with the description, serve to explain and illustrate principles of the invention. The drawings are intended to illustrate major features of the exemplary embodiments in a diagrammatic manner. The drawings are not intended to depict every feature of actual embodiments nor relative dimensions of the depicted elements, and are not drawn to scale. In the drawings is shown

Fig. 1     a general outline of the system for carrying out the method of the invention;

Fig. 2     an example of the sample layer in a test device;

Fig. 3A-D     sketches of arrangements for heat sources, where Fig. 3A shows a resistor as heat source;

Fig. 3B     a resistance heating element;

Fig. 3C     a flash light as heat source focused on a reduced area of the sample layer;

Fig 3D     a flash light as heat source focused on a total area of the sample layer;

Fig. 4     the input square wave test signal and the time resolved response signal;

Fig. 5     a diagram showing the basics behind the Fourier transformation;

Fig. 6     a schematic view showing the result of the beak-down of the result signal by fast Fourier transformation (FFT);

Fig. 7     a plot of a frequency vs. amplitude resulting from the break-down of Fig. 6, and

Fig. 8     a frequency vs. phase shift curve for a sample.

Embodiments of the invention use quantitative measurements of the phase shift/time delay between thermal stimulation and thermal response of a sample to investigate various properties of the sample. The measured thermal response and/or the shape of the measured response waveform may be used for automated and semi-automated data analysis. The analysis can provide information about the sample, such as the sample's thermal properties and likely composition, the sample's composition and/or thickness uniformity, resulting property of multiple layers forming the sample, etc.

In general, localized heating generate infrared (IR) wavelength thermal waves that may propagate through the sample until they reach the sample's surface. This results in a periodically increased temperature at the surface of the sample, above the heat source producing the hot spot or thermal excitation location. This temperature increase can be measured using lock-in thermography (LIT). The time constant of the underlying thermal diffusion process determines the phase shift between the thermal excitation and the thermal response. In simple terms, the larger the delay caused by the thermal dampening effect, the higher the resulting phase shift. Thus, traditional LIT utilize this property to investigate defects in a sample. On the other hand, the embodiments disclosed herein utilize this property to study the parameters of the sample material.

The parameter which describes the influence of the thermal properties of a material layer is herein called thermal diffusion length (p) which describes the damping of the thermal wave inside the bulk material. The thermal diffusion length p (in mm) is characteristic for each material propagated by the thermal wave. It is defined as the characteristic length where the amplitude of the thermal wave is dropped down to $e^{-1}$. It can be calculated, as shown in the equation below, by the thermal parameters: heat conductivity ($\lambda$ in W/m*K), specific heat capacity ($c_p$ in J/g*K), density ($\rho$ in g/cm$^3$) and the applied lock-in frequency ($f_{lock-in}$ in Hz).

$$\mu = \sqrt{\frac{2\lambda}{C_p \rho 2\pi f_{lock-in}}} = \sqrt{\frac{2a}{2\pi f_{lock-in}}} \qquad \text{Equation 1}$$

In the second part of equation 1 the thermal parameters were summarized as the thermal diffusivity ($a = \lambda/C_p\rho$ in mm$^2$/s). The thermal diffusivity is directly proportional to the heat conductivity ($\lambda$ in W/m*K), and inversely proportional to the product of specific heat capacity ($c_p$ in J/g*K) and density ($\rho$ in g/cm$^3$) of the material making up the sample. For known material, the thermal diffusivity can be known or looked up in a published reference. On the other hand, if the thermal diffusivity can be measured over many locations of the sample, the result can provide information such as the density uniformity of the sample, the uniformity of the thermal properties of the sample, e.g., the ratio of heat conductivity over specific heat capacity, the resulting density and or thermal properties of a sample made of mixture or layers of materials, etc. The following description provides embodiments to perform such investigations.

Equation 1 also shows that the lower the applied frequency is, the deeper the thermal wave propagates into the solid material. Consequently, reducing the frequency of the excitation signal allows the localization of heat sources even through hundreds of microns of IR-opaque material layers. Due to the fact that the thermal diffusion length can be seen as the damping factor to the thermal wave, it affects not only the amplitude but also the resulting phase. A higher lock-in frequency results in a higher time delay between excitation signal at the hot spot position and the thermal response at the device surface. Therefore, an increase of the phase shift as a function of the increased lock-in frequency has to be expected.

Since the thermal diffusion length p is characteristic for each material propagated by the thermal wave, the deeper the anomaly is within the DUT, the longer time it takes for the thermal wave to propagate to the surface. Thus, reducing the frequency of the excitation signal allows sufficient time for the thermal wave to propagate to the surface and be captured by the IR camera, thereby localizing the heat sources even through hundreds of microns of IR-opaque material layers. Due to the fact that the thermal diffusion length can be seen as the damping factor to the thermal wave, it affects not only the amplitude but also the resulting phase. A higher lock-in frequency results in a higher time delay between excitation signal at the hot spot position and the thermal response at the device surface. Therefore, an increase of the phase shift as a function of the increased lock-in frequency has to be expected.

The relationship between phase shift of the phase $\Phi$ and hot spot depth z is described as:

$$\mu = \frac{z}{\Phi} * 180/\pi \qquad\qquad \text{Equation 2}$$

wherein $\mu$ represents the thermal diffusion length. That is, the thermal diffusion length is directly proportional to the depth of the thermal excitation and inversely proportional to the phase shift. Thus, according to embodiments disclosed herein, for sample having a known thickness, thermal excitation is applied to one surface and the thermal response on the opposite surface is measured with a lock-in IR camera to detect the phase shift. By making measurements over various locations on the sample, the uniformity of the material making up the sample can be determined. That is, if the sample is uniform, then the thermal diffusion length should be the same for all tested locations.

Moreover, if more specific investigation is needed, equations 1 and 2 can be resolved to assist in such investigations. For example, replacing the thermal diffusion length p in equation 1 and resolving the equation as to the specific heat conductivity $\lambda$ yields:

$$\lambda = (z^2 c_p\ \rho)/(\pi f_0\ \Phi) \qquad\qquad \text{Equation 3}$$

It is apparent from the equation (3) that the method and system of the invention can not only be applied to evaluate the specific heat conductivity but also the other parameters of the sample layer, i.e. the material density $\rho$, the specific heat capacity $c_p$ and the thermal diffusion length $\mu$ of the sample layer can be determined. For example, the material density can be determined in case the depths location of the heat source, the specific material specific heat capacity $c_p$ and the specific heat conductivity $\lambda$ are known. These parameters can be analyzed based on the thermal reaction of the sample layer to heat generated by the heat source which acts on the sample layer.

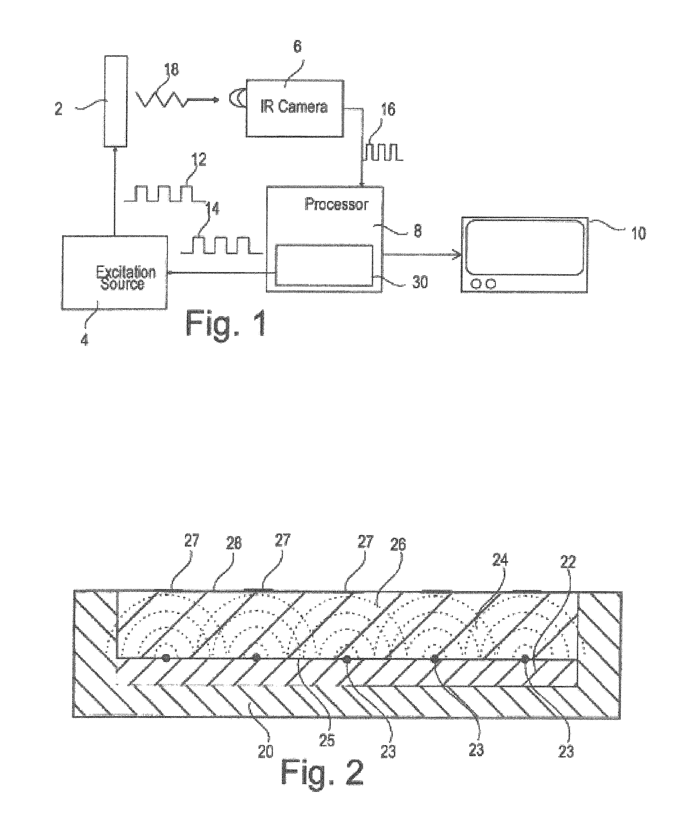

Fig. 1 shows a system which can be used for implementing the methods of the invention as described below. The sample 2 is stimulated by excitation signal 12 at frequency $f_o$ generated by excitation source 4. The frequency $f_o$ of the excitation signal is set by processor 8. A sync signal 14 is output from the processor 8 and sent to the excitation source 4. The simplest is to set the sync signal 14 at the same frequency $f_o$, although it may be a different frequency, so long as provisions are made to enable excitation source 4 to generate the excitation signal 12 at frequency $f_o$. Heat rays 18 outputted from the surface of the sample 2 are captured by the IR camera 6, thereby generating IR images of the surface of the sample. The IR images are transmitted as signals 16 to the processor 8. The frame rate of camera 6 is usually selected taking into account the lock-in frequency $f_o$. In case of a 2-channel IR camera, the frame rate of the camera may be 4-times the lock-in frequency $f_o$.

The processor 8 of the setup of Fig. 1 is also configured to process the image signals according to the LIT method and output one or a plurality of phase measurement points. In case of multiple lock-in frequencies or FFT processing, the processor generates the frequency vs. phase shift curve where having the entire response curve enables further analysis, such as curve fitting to better understand the heat dissipation within the sample layer.

Fig. 2 shows an example of the of a test device 20 being schematically shown as a receptacle for receiving the substrate 22 with plurality of heat sources 23 and the sample layer 24 in heat exchanging relationship with the substrate having the heat sources 23 on top. As shown in Fig. 2, the heat sources, when energized, produces heat waves 26 shown as dotted lines within the sample layer 24. The heat waves 26 star from the back surface 25 and propagate to the front surface 28 of the sample layer 24, causing localized heat spots 27.

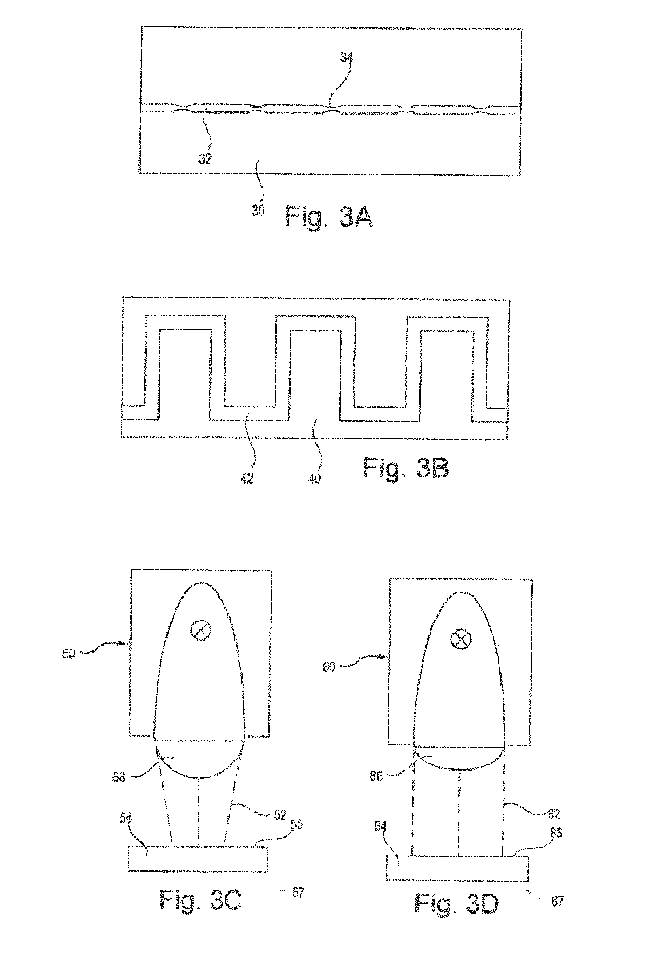

Various kinds of heat sources may be used. One kind of heat source is using a substrate 30 comprising a conductive line 32 with a plurality of resistors 34, as shown in Fig. 3A. The substrate 30 with the resistors 34 may be arranged in the test device 20 of Fig. 2, like the substrate 20, such that the sample layer is in contact with the substrate 30 so that any heat created by the resistors 34 is transferred to the sample. Each of the resistors 34 generates a well-defined local heat source by applying a voltage to the conductive line 32.

Another kind of heat source is using a substrate 40 comprising a meander resistance heating element 42, for example out of copper, as a spread out resistance heating element 42 on top of the substrate 40, as shown in Fig. 2B. The substrate 40 with the meander resistance heating element 42 may be arranged in the test device 20 of Fig. 2 configured to receive the substrate 40 in a heat exchanging relationship with the first surface of the sample layer. The meander resistance heating element 42 is adapted to heat up the entire surface of the first side of the sample layer in contact with the substrate 40 carrying the meander resistance heating element 42 to transfer any heat created by the heat source to the sample layer.

In a still further example, as shown in Fig. 3C, the heat source is a flash light 50 producing a pulsed flash beam 52 focused on the first surface of the sample layer 54 and thus inputting heat energy into the first surface of the sample layer 54 for producing a hot spot which forms the heat source for the measurement. In this embodiment, the pulsed flash beam 52 is focused by the focusing lens 56. In this case, the heat waves produced by the flash light 50 starts from a first surface 55 and propagating to a second surface 57 of the sample layer 54.

In a still further example, as shown in Fig. 3D, the heat source is a flash light 60 producing a pulsed flash beam 62 covering the first surface of the sample layer 64 and thus inputting heat energy into the sample layer 64. In this embodiment, the lens 66 has less focusing power as compared to the embodiment shown in Fig. 3C so that the pulsed flash beam 62 is spread out to eliminate substantially the entire back surface of the sample layer 64. In this case, the heat waves produced by the flash light 60 starts from the back surface 65 and propagating to the front surface 67 of the sample layer 64.

As can be seen from Fig. 1, in combination with the Figures 2 and 3A-3D, the camera would be arranged opposite to the excited surface (27, 57, 67) of the sample 24 (Fig. 2) and 54, 64 (Fig, 3C and Fig. 3D), while the heat is input into the sample layer from the back surface 25, 55, 65 thereof.

A first embodiment of the method an system of the invention is based on the measurement using one single test signal at one single LIT lock-in frequency to measure material parameters of a the sample layer having a first surface and a second surface opposite to the first surface. Therein, a localized hot spot is produced by at least one heat source on the first surface of the sample layer by applying at least one test signal of at least one lock-in frequency to the heat source to activate the heat source. The sample layer is imaged on the second surface by an IR camera to obtain IR images of the sample layer while the test signal is applied to the heat source. The thermal response signal, which is obtained from imaging the second surface of the sample layer and is in correlation to thermal heat propagation within the sample layer, is detected and the phase shift of the frequency specific response signal with respect to the test signal at a heat source position is determined. The determined phase shift together with the sample thickness and applied frequency are used to calculate the material specific parameter, such as the material density, the material heat capacity, the material specific heat conductivity, the thermal diffusion length of the material and the thermal diffusivity.

For example, solving equation 1 for the thermal diffusivity results in:

$$ a = \pi f_0 \mu^2 \qquad\qquad \text{Equation 4} $$

Substituting for the thermal diffusion length from equation 2, provides:

$$ a = \pi f_0 \left( \frac{z}{\Phi} \frac{180}{\pi} \right)^2 \qquad\qquad \text{Equation 5} $$

Thus, by measuring the phase shift Φ, knowing the applied excitation frequency, and knowing the depth, this embodiment enables determining the thermal diffusivity of the material of the sample. For example, the material may be a mixture of materials for which a published thermal diffusivity is not published. Moreover, this embodiment enables the investigation of any changes in the thermal diffusivity of the material resulting from different exposure, treatment, or service conditions.

For example, it is known that certain devices, e.g., solar cells, suffer from light induced degradation when exposed to solar radiation. Much of the degradation can be caused by exposure to ultraviolet spectrum. Thus, the effects of a prolong exposure to ultraviolet radiation may be investigated using this embodiment.

Other parameters may be investigated as well. For example, the specific heat capacity can be determined as follows:

$$c_p = \frac{\lambda}{\pi \rho f_0 \mu^2} \qquad\qquad \text{Equation 6}$$

Thus, the measurement of the phase shift can be used to determine the specific heat capacity of the sample. For example, the phase shift can be used to calculate the thermal diffusion length and then the calculated thermal diffusion length can be inserted in equation 6 to obtain the specific heat capacity.

A second embodiment of the system and the method of the invention is based on the measurement at multiple different LIT lock-in frequencies wherein test signals are applied to the heat source at multiple different Lock-in frequencies in order to determine the phase shift values at the various Lock-in frequencies and to derive the frequency vs. phase curve from which the material parameters can be evaluated. Such measurements may be used to provide more accurate information of the sample, since the heat propagation behavior at different lock-in frequencies is taken into account.

Since a number of measurement runs are depending on the number of phase shift measurement points to be measured to obtain the frequency vs. phase shift curve, the method tends to take some time. That is, a complete test run must be performed for each lock-in frequency so as to obtain the phase shift at that frequency. Each test run must be performed for sufficient number of cycles in order to obtain improved signal to noise ratio (S/N). Therefore, a third embodiment of the system and the method of the invention is based on using a Fourier transformation (FT), preferably a fast Fourier transformation (FFT), whereby the time needed to carry out the measurements is significantly reduced as compared to the measurement of the second embodiment. Moreover, the amount of data obtained is improved over the multiple runs of the second embodiment. The following provides a detailed explanation of the application of Fourier transformation to the thermal response signal in LIT according to the third embodiment.

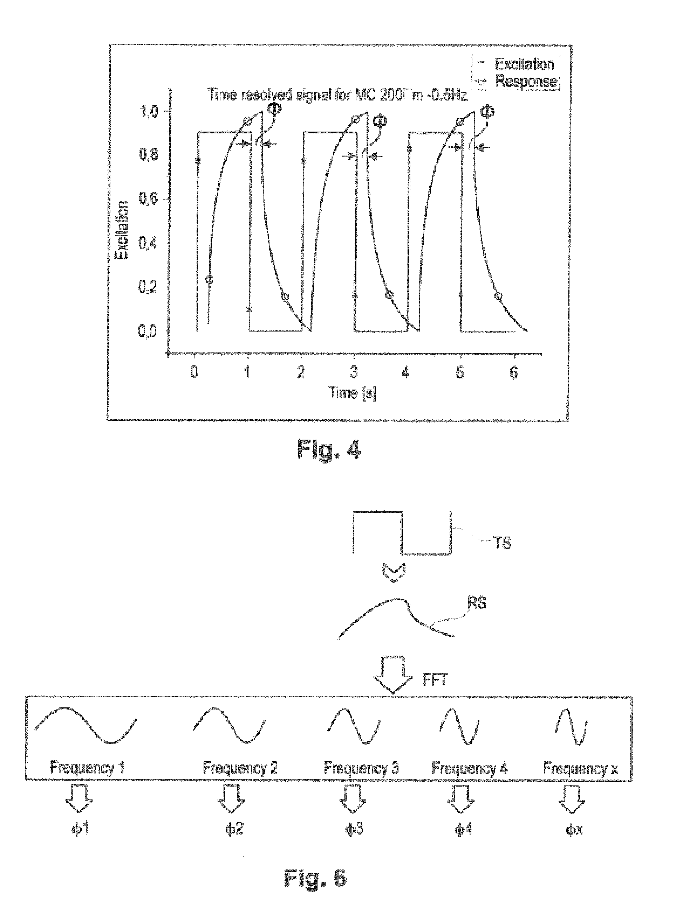

Fig. 4 illustrates a plot of the square-wave excitation signal and the IR response signal. The time delay between the end of the excitation signal and the response signal is the phase shift, marked by Φ. As explained above, the resulting phase shift would differ according to the frequency of the applied excitation signal. Therefore, to obtain accurate measurement of the depth, the measurement needs to be repeated many times at different frequencies, so as to obtain the plot of phase shift vs. lock-in frequency. On the other hand, according to the below described embodiment, the investigation can be concluded accurately using a single measurement at a single frequency, but obtaining the phase shifts corresponding to multiple excitation signals of multiple frequencies.

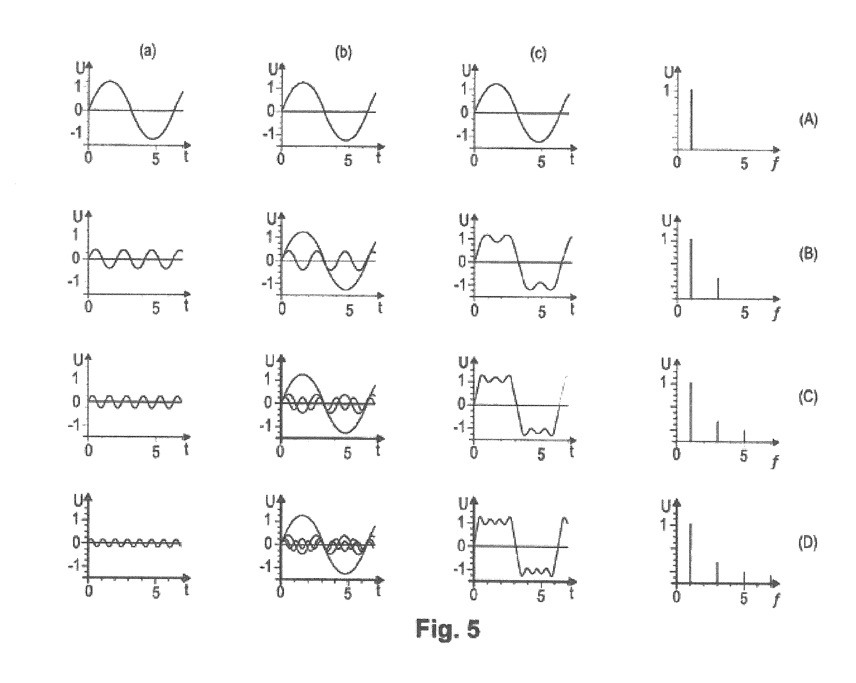

The diagram of Fig. 5 shows the basics behind the Fourier transformation. According to Fourier transformation, each square wave can be approximated by superposition of several sine waves, where the approximation of the wave shape to a square wave pulse is improved as more harmonics of the sine wave at different frequencies are superimposed. In other words, any square wave can be broken down into sine waves having different frequencies as shown in Fig. 5.

In column (a) of Fig. 5 various sine curves are shown in a diagram of amplitude vs. time. The sine curves have different frequencies as can be seen from the diagrams in column (a). Column (b) shows in line (A) the sine wave, which may be considered as the fundamental, which also shown in column (a), line (A). Additional higher harmonics sine waves are shown superimposed on the fundamental sine wave of column (b). The diagram of column (b), line (B), shows the sine wave of the first line as well as the sine wave of the diagram on column (a), line (b), in a combined diagram. The diagram in column (c), line (B), shows the wave form which is generated by superimposing, i.e., adding, the line curves of column (a), line (A) and line (B). It can be seen that a square wave is approximated already in the diagram of column of (c), line (B). The diagram in column (c), line (C), shows the resulting curve from a superposition of the sine waves in column (a), lines (A), (B) and (C), wherein the square wave is better approximated as compared to the waves shape in column (c), line (B). The diagram in column (c), line (D) is a superposition of all four sine waves of column (a) and can a better approximation to a square wave pulse. As can be seen, the more higher-harmonics sine waves are added to the fundamental sine wave, the better the approximation of the non-harmonic square wave becomes.

As can be seen from the above explanation, any square wave can be broken down into sine waves having different frequencies as shown in Fig. 5. The Fourier transformation can break down any original signal only if the original signal does not have a sine-shape, i.e. if the signal is a non-harmonic signal. Therefore, by definition, a non-harmonic signal can have any shape except a sine-shape. Examples of a non-harmonic signal are square waves, triangle waves, saw tooth waves and the like. The following embodiments make use of this approach to localize the buried hot spots using excitation at only a single frequency.

It is noted that the use of a non-harmonic excitation signal, specifically of square or rectangular excitation signal, for investigation of active devices is not an impediment, but is rather natural. Many active devices are designed to assume different binary states according to applied binary signal. Thus, testing certain devices using a binary square or rectangular signal is actually sometimes advantageous.

Therefore, according to the following embodiments, the sample is excited by a non-harmonic, i.e., a square wave signal at only a single frequency. The single frequency is selected as the lowest frequency desired to be investigated. A Fourier transformation is then applied to the resulting response signal in order to extract a response signal corresponding to all desired excitation frequencies. This may be understood from the following. Fig. 6 shows an example of a square wave excitation pulse TS and the resulting response signal RS in a diagram of time vs. excitation intensity. In Fig. 6 only a single excitation pulse and a single response pulse are shown, but the excitation signal and IR response signal can be collected over multiple cycles to obtain improved S/N. In one example, the frequency of the excitation signal is selected as 0.5 Hz. As a starting point, such a square wave excitation signal is applied to a heat source as a non-harmonic test signal. While the test signal is applied to the heat source, it heats the sample and a heat wave propagates to the surface of the sample. The sample's surface is imaged by the infrared camera to obtain an IR image of the sample, which results in the response signal RS that is shown in Fig. 6. This thermal response signal RS is obtained from the IR camera's imaging and has a correlation to the thermal heat propagation within the DUT.

The thermal response signal RS is then subjected to a fast Fourier transformation (FFT) to break down the thermal response signal into a frequency specific spectrum containing at least the individual frequencies 1 to x, as shown in Fig. 6, where the frequencies 1 to x each show a specific phase shift $\phi 1$ to $\phi x$, respectively. Such phase shifts $\phi 1$ to $\phi x$ are then plotted against the frequencies to obtain the frequency vs. phase shift curve. By means of the FFT, the measurement process per sample is further shortened because the results of the FFT are already individual frequency specific response signals at pre-selectable frequencies.

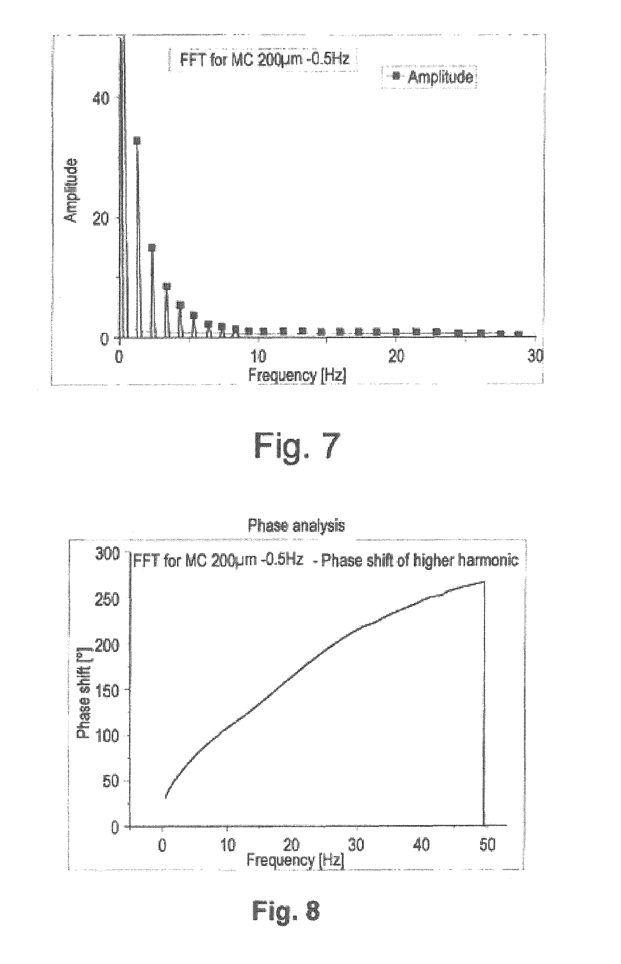

The effect of the fast Fourier transformation (FFT) is also shown in Fig. 7, showing a frequency vs. amplitude diagram of the result of the fast Fourier transformation (FFT). That is, the FFT changes the information from the time domain (i.e., plot of amplitude v. time) to the frequency domain (i.e., amplitude v. frequency). Fig. 7 shows that breaking down the thermal response signal RS by FFT results in a large number of individual specific peaks in amplitude related to the individual frequencies. Since the amplitude of the signals is also related to the phase shift caused by the sample and the respective frequencies, the results obtained from the diagram of Fig. 7 can be plotted as frequency vs. phase shift diagram as shown in Fig. 8.

It is to be noted that the frequencies related to the peaks in the diagram of Fig. 7 are the Frequencies 1 to Frequency x shown in Fig. 6. Such frequencies correspond to the harmonic signals associated with the basic harmonic signal (sine or cosine wave). In other words, the phase shifts of the frequencies specific response signals are determined at the multiple specific frequencies, and a frequency vs. phase shift curve can be obtained from the phase shifts of the frequency specific response signals (response signals at the Frequencies 1 to 4 and Frequency x) related to the depths location of the hot spot generated by the heat source.

The diagram of Fig. 8 is the frequency vs. phase shift curve for a sample. The curve shown in Fig. 8 is obtained from a number of measurement points contained in the frequency range from 0.5 to 50 Hz and based on the peaks in the diagram of Fig. 7. It is to be noted that the frequency range is extended as compared to the measurement range shown in Fig. 7. However, in practice, at most four or five measurement points corresponding to the peaks in the diagram of Fig. 7 are sufficient in order to arrive at a basis for a satisfying result of the measurement method.

The diagram of Fig. 8 again shows the advantage of the system and the method according to the invention. i.e., that a particular frequency vs. phase shift curve can be obtained for a number of lock-in frequencies during one single measurement run using one non-harmonic test signal at one frequency as excitation energy for causing the sample to react in reply to the non-harmonic test signal, where the respective one single response signal is a further processed to obtain the frequency vs. phase shift curve. In other words, there is only one measurement at one frequency necessary for each type of the sample.

The results of the experimental process may be compared to or used in conjunction with theoretical calculations which may be obtained using various methods.

The detailed analysis of the internal heat propagation and the separation of different influences to the resulting phase shift can be investigated using the method of finite element modeling. The modeling is used to simulate the lock-in process for a known device build up and defined hot spot positions. The heat transfer through a 3D sample device can be done using 2D/3-D thermal modeling.

As an alternative, the method may comprise evaluating material specific parameter frequency vs. phase shift behavior by analytical solution of the thermal wave propagation; and correlating the evaluated material specific parameter related frequency vs. phase shift behavior to the detected phase shift to identify the material specific parameter of the sample layer.

As shown in Figs 2 and 3A, the excitation can be done one several points on the sample, and may be done in two-dimensions, i.e., spatial excitation. Any of the above methods may be used to calculate phase shift for each point on the sample's surface, which correspond to an excitation point on the opposite surface. Using the obtained phase shift, the uniformity of the material making up the sample can be investigated. That is, if the sample is uniform, all of the imaged points should provide the same phase shift. If the phase shift differs, it may mean that the sample is not uniform, either in composition or in thickness. Plugging the phase shift in the above listed equations can provide the corresponding material characteristic and indicate whether the characteristics are uniform over the area of the sample.

It should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein.

The present invention has been described in relation to particular examples, which are intended in all respects to be illustrative rather than restrictive. Those skilled in the art will appreciate that many different combinations of hardware, software, and firmware will be suitable for practicing the present invention. Moreover, other implementations of the invention will be apparent to those skilled in the art from consideration of the specification and practice of the invention disclosed herein. It is intended that the specification and examples be considered as exemplary only, with a true scope of the invention being indicated by the following claims.

List of reference signs

2      sample

4      excitation source

6      frame rate of camera

8      processor

12     excitation signal

14     sync signal

16     signals

18     heat rays

20     test device

22     substrate

23     heat sources

24     sample layer

25     back surface

26     heat waves

27     excited surface

28     front surface

30     substrate

| 32 | conductive line |
| 34 | resistors |
| 40 | substrate |
| 42 | heating element |
| 50 | flash light |
| 52 | flash beam |
| 54 | sample layer |
| 55 | first surface |
| 56 | focusing lens |
| 57 | excited surface |
| 60 | flash light |
| 62 | flash beam |
| 64 | sample layer |
| 65 | back surface |
| 66 | lens |
| 67 | excited surface |

**Claims**

1. A lock-in thermography (LIT) method for determining material parameters of a sample layer having a first surface and a second surface opposite to the first surface, the method comprising:

producing at least one localized hot spot by a heat source on the first surface of the sample layer by applying at least one test signal of at least one lock-in frequency to the heat source to activate the heat source;
imaging the sample layer on the second surface using an infrared sensor to obtain IR images of the sample layer while the test signal is applied to the heat source;
detecting a thermal response signal obtained from the imaging of the sample layer, the thermal response signal being in correlation to thermal heat propagation within the sample layer;
determining the phase shift of the frequency specific response signal with respect to the test signal at a heat source position; and
using the phase shift of the frequency specific response signal to calculate material parameters of the sample layer, wherein the material specific parameter is any of a material density, a material specific heat capacity and a material specific heat conductivity.

2. The method of claim 1, comprising:

applying a plurality of test signals of a plurality of lock-in frequencies to the heat source to activate the heat source;
imaging the sample layer using an infrared sensor to obtain IR images of the sample layer while the test signals are applied to the heat source at the plurality of lock-in frequencies;
detecting thermal response signals obtained from the imaging of the sample layer for each of the plurality of lock-in frequencies, the thermal response signals being in correlation to thermal heat propagation within the sample layer;

determining the phase shifts of the frequency specific response signals with respect to the test signals at a heat source position; and

obtaining the frequency vs. phase shift curve from the determined phase shift measurements of the frequency specific response signals to the test signals which phase shifts are related to the material parameters of the sample layer.

3. The method of claim 1, wherein applying at least one test signal comprises applying a non-harmonic test signal to the heat source to activate the heat source; the method further comprising:

subjecting the response signal to a Fourier transformation (FT), preferably a fast Fourier transformation (FFT), to break down the response signal into a frequency spectrum containing at least first and second harmonics signals of a base harmonic sine or cosine signal as frequency specific response signals at multiple specific frequencies; and,

determining the phase shifts of the frequency specific response signals at the multiple specific frequencies at a heat source position.

4. The method of claim 3, further comprising obtaining a frequency vs. phase shift curve from the determined phase shifts of the frequency specific response signals related to the material parameters of the sample layer.

5. The computer program of claim 18, wherein the computer further receives a thickness parameter, z, of the sample and calculates the thermal diffusion length, $\mu$, by inserting the thickness and the phase shift, $\Phi$, into the equation:

$$\mu = \frac{z}{\Phi} * 180/\pi.$$

6. The computer program of claim 18, wherein the computer further receives a thickness parameter, z, of the sample and calculates the thermal diffusivity, a, by inserting the thickness, z, and the phase shift, $\Phi$, into the equation:

$$a = \pi f_0 \left( \frac{z}{\Phi} \frac{180}{\pi} \right)^2.$$

7. The computer program of claim 19, wherein the computer further receives a density parameter, $\rho$, and specific heat conductivity, $\lambda$, of the sample and calculates the specific heat capacity, $c_p$, by inserting the density, $\rho$, specific heat conductivity, $\lambda$, the lock-in frequency $f_0$, and the thermal diffusion length, $\mu$, into the equation: $c_p = \frac{\lambda}{\pi \rho f_0 \mu^2}$.

8. A lock-in thermography (LIT) system for determining material parameters of a sample layer having a first surface and a second surface opposite to the first surface, comprising:

at least one heat source producing a localized hot spot on the first surface of the sample layer in response to a test signal;

an excitation source applying at least one test signal of at least one lock-in frequency to the heat source to activate the heat source;

an infrared sensor for imaging the sample layer on the second surface to thereby obtain IR images of the sample layer while the test signal is applied to the heat source; and,

a processor, configured to detect a thermal response signal obtained from the imaging of the sample layer; determine the phase shift of the frequency specific response signal with respect to the test signal at a heat source position; use the phase shift to calculate material specific parameter of the sample; and output to the user the material specific parameter, wherein the material specific parameter is any of a material density, a material heat capacity, a material specific heat conductivity and a thermal diffusion length.

9. The system of claim 8, wherein the processor is further configured to obtain a frequency vs. phase shift measurement.

10. The system of claims 8, wherein the excitation source is configured to apply a plurality of test signals of a plurality of lock-in frequencies to the heat source to activate the heat source at a plurality of lock-in frequencies.

11. The system of claim 8, wherein the excitation source is configured to apply a non-harmonic test signal to the heat source to activate the heat source; and,
wherein the processor being further configured to:

subject the response signal to a Fourier transformation (FT), preferably a fast Fourier transformation (FFT), to break down the response signal Into a frequency spectrum containing at least first and second harmonics signals as frequency specific response signals at multiple specific frequencies;
determine the phase shifts of the frequency specific response signals at the multiple specific frequencies at a heat source position; and
use the phase shifts to calculate material specific parameter of the sample.

12. The system of claim 9, wherein the processor is further configured to obtain a frequency vs. phase shift curve from the determined phase shifts of the frequency specific response signals related to the material parameters of the sample layer.

13. The system of claim 9, wherein the infrared sensor is a two-dimensional IR camera synchronized with the test signal from an external source.

14. The system of claim 8, wherein the heat source is a resistor a resistance heating element arranged on a substrate in a test device configured to receive the sample layer in a heat exchanging relationship where the first surface of the sample layer is in contact with the heat source, or a flash light configured to output a pulsed flash beam to the first surface of the sample layer.

15. A computer program that, when executed by a computer, causes the computer to carry out the method of any of the claims 1 to 7.

Fig. 1

Fig. 2

Fig. 3A

Fig. 3B

Fig. 3C

Fig. 3D

**Fig. 4**

**Fig. 6**

Fig. 5

Fig. 7

Fig. 8

Europäisches
Patentamt

European
Patent Office

Office européen
des brevets

## EUROPEAN SEARCH REPORT

Application Number

EP 13 18 1508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WOLF A ET AL: "Thermophysical analysis of thin films by lock-in thermography", JOURNAL OF APPLIED PHYSICS, AMERICAN INSTITUTE OF PHYSICS. NEW YORK, US, vol. 96, no. 11, 1 January 2004 (2004-01-01), pages 6306-6312, XP012068299, ISSN: 0021-8979, DOI: 10.1063/1.1811390 | 1,8,9, 13-15 | INV. G01N25/18 G01N25/00 |
| Y | * the whole document * | 2-7, 10-12 | |
| Y,D | WO 2011/156527 A1 (DCG SYSTEMS INC [US]; FRAUNHOFER GES FORSCHUNG [DE]; ALTMANN FRANK [DE] 15 December 2011 (2011-12-15) * paragraph [0037] - paragraph [0057]; figures 4-8, 9B, 11A, 11B * | 2,5-7, 10,12 | |
| Y,D | CHRISTIAN SCHMIDT ET AL: "Non-destructive defect depth determination at fully packaged and stacked die devices using Lock-in Thermography", PHYSICAL AND FAILURE ANALYSIS OF INTEGRATED CIRCUITS (IPFA), 2010 17TH IEEE INTERNATIONAL SYMPOSIUM ON THE, IEEE, PISCATAWAY, NJ, USA, 5 July 2010 (2010-07-05), pages 1-5, XP031720074, ISBN: 978-1-4244-5596-6 * the whole document * | 2,5-7, 10,12 | |

TECHNICAL FIELDS
SEARCHED (IPC)

G01N
G01R
G01B

-/--

The present search report has been drawn up for all claims

| Place of search | Date of completion of the search | Examiner |
|---|---|---|
| The Hague | 18 October 2013 | Zwerger, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 18 1508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Fernando Lopez Rodriguez ET AL: "NON-DESTRUCTIVE EVALUATION OF COMPOSITES MATERIALS BY PULSED-PHASE THERMOGRAPHY: DEPTH INVERSION", Proceedings of COBEM 2011, 28 October 2011 (2011-10-28), pages 1-11, XP055082429, Retrieved from the Internet: URL:http://emc.ufsc.br/labtermo/publica/ac 19_COB25761_2011 TIR.pdf [retrieved on 2013-10-03] * Introduction, 2.2 Principles of Pulsed Phase Thermography, 2.3 Data acquisition and processing in PPT; figures 1, 2, 7, 8 * ----- | 3,4,11 | |
| Y | US 6 812 468 B1 (BAUMANN JOACHIM [DE] ET AL) 2 November 2004 (2004-11-02) * column 2, lines 18-32; figures 1, 2 * ----- | 3,4,11 | |
| A | SALAZAR AGUSTÃN ET AL: "The strong influence of heat losses on the accurate measurement of thermal diffusivity using lock-in thermography", APPLIED PHYSICS LETTERS, AIP, AMERICAN INSTITUTE OF PHYSICS, MELVILLE, NY, US, vol. 95, no. 12, 23 September 2009 (2009-09-23), pages 121905-121905, XP012122140, ISSN: 0003-6951, DOI: 10.1063/1.3236782 * the whole document * ----- -/-- | 1-15 | TECHNICAL FIELDS SEARCHED (IPC) |

The present search report has been drawn up for all claims

| Place of search | Date of completion of the search | Examiner |
|---|---|---|
| The Hague | 18 October 2013 | Zwerger, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 13 18 1508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CAROSENA MEOLA ET AL: "Non-destructive control of industrial materials by means of lock-in thermography; Non-destructive control of industrial materials by means of lock-in thermography", MEASUREMENT SCIENCE AND TECHNOLOGY, IOP, BRISTOL, GB, vol. 13, no. 10, 1 October 2002 (2002-10-01), pages 1583-1590, XP020063624, ISSN: 0957-0233, DOI: 10.1088/0957-0233/13/10/311 * the whole document * | 1-15 | |

TECHNICAL FIELDS
SEARCHED (IPC)

The present search report has been drawn up for all claims

| Place of search | Date of completion of the search | Examiner |
|---|---|---|
| The Hague | 18 October 2013 | Zwerger, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 18 1508

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2013

| Patent document cited in search report | Publication date | Patent family member(s) | | Publication date |
|---|---|---|---|---|
| WO 2011156527 A1 | 15-12-2011 | CN | 103026216 A | 03-04-2013 |
| | | EP | 2580583 A1 | 17-04-2013 |
| | | JP | 2013526723 A | 24-06-2013 |
| | | KR | 20130087487 A | 06-08-2013 |
| | | SG | 186207 A1 | 30-01-2013 |
| | | TW | 201215881 A | 16-04-2012 |
| | | US | 2011297829 A1 | 08-12-2011 |
| | | WO | 2011156527 A1 | 15-12-2011 |
| US 6812468 B1 | 02-11-2004 | DE | 19837889 C1 | 21-12-2000 |
| | | EP | 1110074 A2 | 27-06-2001 |
| | | JP | 2002523739 A | 30-07-2002 |
| | | US | 6812468 B1 | 02-11-2004 |
| | | WO | 0011450 A2 | 02-03-2000 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7038209 B
- WO 2011156527 A1

- WO 2011156527 A

**Non-patent literature cited in the description**

- Non-destructive defect depth determination at fully packaged and stacked die devices using Lock-in Thermography. **CHRISTIAN SCHMIDT et al.** PHYSICAL AND FAILURE ANALYSIS OF INTEGRATED CIRCUITS (IPFA, 2010), proceedings 17th IEEE International Symposium on the IEEE. 05 July 2010, 1-5